(19) **Europäisches Patentamt**

**European Patent Office**

**Office européen des brevets**

(11) **EP 1 130 391 B1**

(12) **FASCICULE DE BREVET EUROPEEN**

(45) Date de publication et mention
de la délivrance du brevet:
**14.08.2002 Bulletin 2002/33**

(51) Int Cl.⁷: **G01N 29/20**

(21) Numéro de dépôt: **01400530.0**

(22) Date de dépôt: **01.03.2001**

(54) **Procédé de mesure d'adhérence d'un revêtement sur un substrat**

Verfahren zur Messung der Haftfestigkeit einer Beschichtung auf einem Substrat

Method for measuring the adhesion of a coating on a substrate

(84) Etats contractants désignés:
**DE ES FR GB IT SE**

(30) Priorité: **02.03.2000 FR 0002669**

(43) Date de publication de la demande:
**05.09.2001 Bulletin 2001/36**

(73) Titulaire: **SNECMA MOTEURS**
**75015 Paris (FR)**

(72) Inventeurs:
• **Chatellier, Jean-Yves François Roger**
**94110 Arcueil (FR)**
• **Ramahefasolo, Daniel Sébastien**
**91540 Echarcon (FR)**

(56) Documents cités:
**US-A- 4 541 287**        **US-A- 5 663 502**

**Description**

Le sujet de cette invention est un procédé de mesure d'adhérence d'un revêtement sur un substrat.

L'adhérence d'un revêtement sur un substrat peut être évaluée en collant les faces libres de l'assemblage obtenu, des deux côtés de l'interface de jonction, à des surfaces planes d'extrémité de mors qu'on tire en sens opposés sur une machine d'essai en traction. La mesure d'adhérence revient alors à une mesure mécanique directe de la force nécessaire pour rompre la jonction et arracher le revêtement du substrat. Le brevet américain US-A-4541 décrit une telle méthode pour mesurer l'adhérence d'un revêtement métallique sur un substrat. Toutefois, on observe toujours des dispersions considérables des forces de rupture mesurées pour des éprouvettes fabriquées de façon semblable, ce qui prouve que le mode opératoire introduit des incertitudes, qui sont si grandes qu'on ne peut en réalité pas accorder de valeur à ces essais. Il est probable que le collage est responsable de défauts d'uniformité de transmission de la force de traction à travers l'assemblage, mais on ne peut y remédier même en prenant le plus grand soin en le réalisant.

On propose ici une méthode indirecte de mesure de cette résistance à l'arrachement du revêtement sur le substrat, à l'aide de mesures ultrasonores. Sous sa forme la plus générale, l'invention est relative à un procédé de mesure d'adhérence d'un revêtement sur un substrat, caractérisé en ce qu'il consiste à envoyer des ultrasons dans le substrat et vers le revêtement, à capter une succession d'échos résultant de réflexions toujours plus nombreuses des ultrasons sur des faces du substrat comprenant une interface entre le substrat et le revêtement, à évaluer un coefficient d'atténuation des échos dans une fonction traduisant une décroissance d'amplitude des échos en fonction de leurs nombres de réflexions, et à déduire ladite adhérence d'une fonction de corrélation, estimée auparavant avec des éprouvettes d'étalonnage, entre les coefficients d'atténuation et les adhérences des revêtements, obtenues par des essais mécaniques, des éprouvettes d'étalonnage.

L'invention sera maintenant décrite au moyen des figures, parmi lesquelles :

- la figure 1 illustre l'appareillage utilisé pour la méthode,
- la figure 2 explique les phénomènes physiques de propagation des ultrasons,
- la figure 3 illustre une courbe d'échos obtenue et son exploitation,
- la figure 4 illustre un essai mécanique à l'arrachement,
- et la figure 5 illustre une corrélation entre les essais mécaniques et par ultrasons.

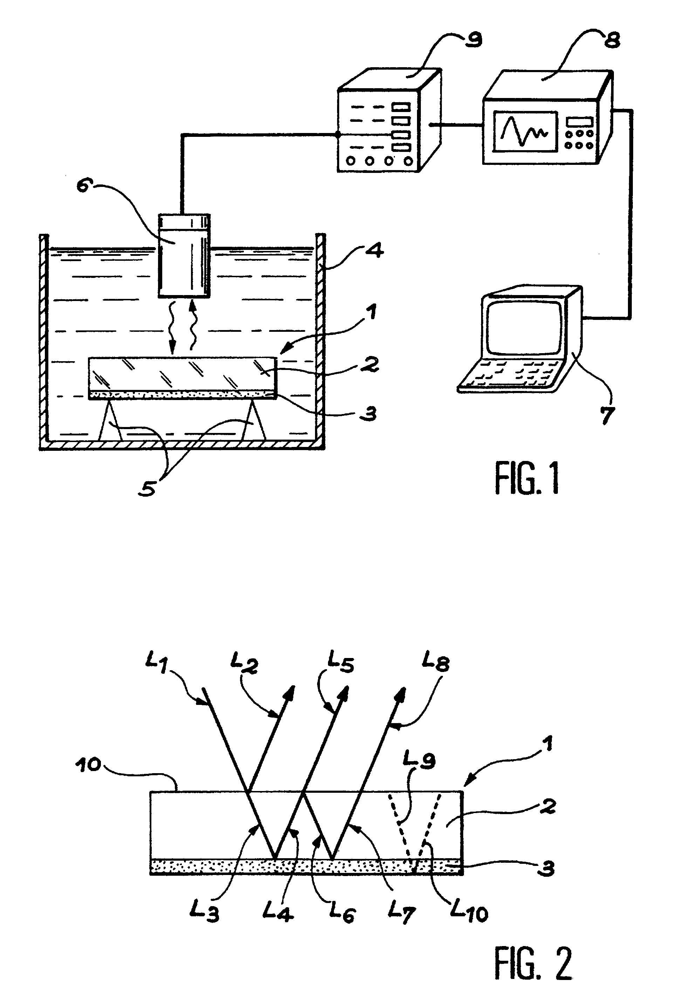

Se reportant à la figure 1, on voit qu'une éprouvette d'essai porte la référence 1 et consiste en un substrat 2 sur lequel on a déposé un revêtement 3 d'épaisseur beaucoup plus faible par un procédé tel que la projection au plasma, pour lequel les mesures d'adhérence ont une grande importance en raison de l'irrégularité de structure du revêtement et donc de sa fragilité. L'éprouvette 1 est plongée dans l'eau d'une cuve 4 et posée sur des blocs 5 au fond de celle-ci, le revêtement 3 étant orienté vers le bas. Un capteur 6 est disposé au-dessus de l'éprouvette 1, sensiblement perpendiculairement à l'interface substrat 2-revêtement 3, et il est relié à un moyen de commande 7 par l'intermédiaire d'un oscilloscope 8 et d'un générateur d'impulsions 9. Le capteur 6 émet des ultrasons vers l'éprouvette 1, et fonctionne aussi comme récepteur ; l'oscilloscope 8 enregistre les échos qu'il reçoit et permet de les exploiter de la façon qu'on examinera plus loin. En variante, on pourrait émettre les ultrasons et les recevoir par des capteurs séparés.

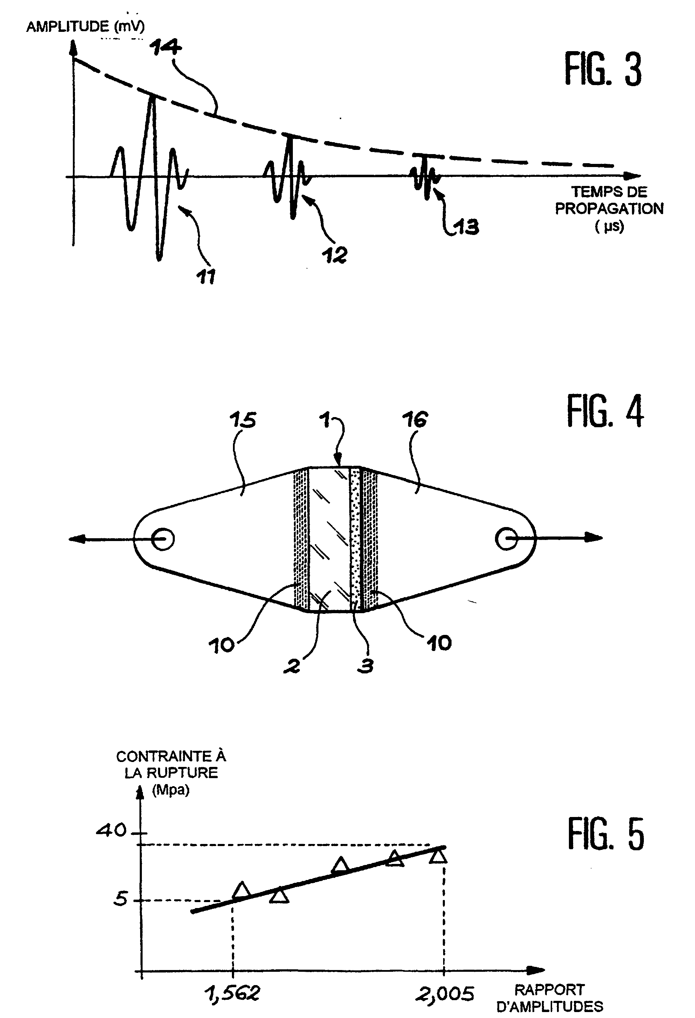

La figure 2 illustre un phénomène possible de propagation d'ultrasons dans l'éprouvette 1 quoique leur direction soit oblique, contrairement à ce qu'on réalise dans le mode de réalisation de la figure 1 où le même capteur émet et reçoit des ondes à propagation verticale ; cette figuration a été adaptée pour des raisons de clarté de la représentation et de généralité de l'explication, mais le principe de la mesure reste le même.

Chaque milieu matériel possède une impédance acoustique particulière. Quand une onde acoustique atteint la limite d'un milieu et entre dans un autre, une portion pénètre dans cet autre milieu et une autre est réfléchie et renvoyée dans le premier ; leurs proportions dépendent des impédances des milieux, la transmission étant totale quand les impédances sont égales. Comme le montre la figure 2, une onde émise par la ligne L1 dans l'eau de la cuve 4 et qui atteint la face supérieure 10, opposée au revêtement 3, du substrat 2 est renvoyée partiellement par la ligne L2 en un premier écho mais le reste de son énergie pénètre dans le substrat 2 par une ligne L3 jusqu'à l'interface avec le revêtement 3. Une partie de cette énergie y est réfléchie et parcourt le substrat 2 en sens opposé par la ligne L4, et une partie en ressort par la face supérieure 10 par la ligne L5 prolongeant la ligne L4 en formant un deuxième écho. Le reste de l'énergie de l'onde de L3 entre dans le revêtement 3 et s'y perd, échappant à la détection, puisque la faible épaisseur du revêtement 3 ne permet d'y faire passer que des ondes de Lamb qui sont orientées dans son plan et que l'atténuation des ondes est très rapide dans les structures micrographiques tourmentées qu'on obtient par projection au plasma. Une partie de l'onde parcourant la ligne L4 subit une nouvelle réflexion sur la face supérieure 10 du substrat 2, et parcourt de nouveau l'épaisseur du substrat 2 par la ligne L6 avant qu'une partie de son énergie ne soit de nouveau réfléchie vers le haut, par la ligne L7, à l'interface substrat 2-revêtement 3. Un troisième écho est alors formé par la portion d'énergie de l'onde qui quitte le substrat 2 par la face supérieure 10, par la ligne L8 prolongeant la ligne L7. Des échos successifs sont produits de la même manière et enregistrés par le capteur 6.

Il convient de remarquer que les lignes L3, L4, L6, L7, etc. traversant le substrat 2 ont toutes la même longueur, si bien que les échos successifs parvenant au capteur 6 par les lignes L2, L5, L8 etc. sont espacés de délais égaux, correspondant au temps nécessaire aux ultrasons pour parcourir deux fois chacune des longueurs susmentionnées dans le substrat 2.

Le procédé consiste à prendre au moins trois échos successifs de l'onde émise par le capteur 6 ; ils portent les références 11, 12 et 13 sur le diagramme de la figure 3, qui est un relevé de l'oscilloscope 8 ; leurs amplitudes sont toujours décroissantes et peuvent être évaluées par une courbe enveloppe 14 qui a l'équation d'une exponentielle.

Le paramètre de cette exponentielle, qu'on détermine de la façon suivante, peut être corrélé à l'adhérence du revêtement 3. Si l'onde émise par le capteur 6 a une amplitude $A_0$, l'amplitude de l'onde du premier écho ($L_2$) a l'amplitude $A_1 = A_0 r_{10} e^{-2h\alpha}$, où $r_{10}$ est le coefficient de réflexion de l'onde sur la face supérieure 10, h la distance parcourue entre la face supérieure 10 et le capteur 6, et $\alpha$ le coefficient d'amortissement des ultrasons dans l'eau ; le deuxième écho ($L_5$) a l'amplitude $A_2 = A_0 t_{10} t_{01} r_{2-3} e^{-2h\alpha} e^{-2x\beta}$, où $t_{10}$ est le coefficient de transmission à travers la face supérieure 10 de l'eau vers le matériau et $t_{01}$ du matériau vers l'eau, $r_{2-3}$ le coefficient de réflexion à l'interface substrat 2- revêtement 3, x est l'épaisseur du matériau 2 et $\beta$ le coefficient d'amortissement dans le substrat 2 ; le troisième écho ($L_8$) a l'amplitude $A_3 = A_0 t_{10} t_{01} r^2_{2-3} r_{10} e^{-2h\alpha} e^{-4x\beta}$.

On voit que $\dfrac{A_3}{A_2} = r_{2-3}.r_{10}.e^{-2x\beta}$, et que les échos successifs seront dans le même rapport, à l'exception du premier ($A_1$). On a constaté que ce rapport d'atténuation était représentatif de l'adhérence du revêtement 3. La corrélation peut être établie par des expériences préliminaires sur des éprouvettes dont on mesure successivement le rapport d'atténuation et, de façon directe, la résistance du revêtement à l'arrachement. Quand la fonction de corrélation a été obtenue, les éprouvettes ne sont plus soumises qu'à l'essai non destructif aux ultrasons.

On s'est placé dans le cas d'une absorption des ondes ultrasonores dans le revêtement 3, seules les portions de l'onde réfléchies à l'interface substrat 2-revêtement 3 pouvant revenir au capteur 6. Ce cas est usuel car les revêtements au plasma ont en général une impédance beaucoup plus faible que les métaux susceptibles de composer le substrat 2, de sorte que le coefficient $r_{2-3}$ est élevé. Mais on peut rencontrer des exceptions, où les impédances du revêtement 3 et du substrat 2 sont accordées et où l'absorption des ondes par des revêtements 3 plus massifs est plus faible. On constate alors que les échos ne proviennent plus de réflexions sur l'interface substrat 2-revêtement 3, mais de réflexions sur la face inférieure du revêtement 3, selon

des lignes comme $L_9$ et $L_{10}$. La formule donnant les amplitudes des échos est alors compliquée en ce qu'il faut y mentionner l'atténuation des ondes dans le revêtement 3, et que le coefficient $[2.(t_{2-3}r_3)]$ remplace $r_{2-3}$, $t_{2-3}$ étant le coefficient de transmission à l'interface et $r_3$ le coefficient de réflexion entre le revêtement 3 et le liquide, mais le mode opératoire ne change pas : on calcule un rapport entre échos qu'on corrèle à une fonction obtenue auparavant pour estimer l'adhérence du revêtement 3.

Il est remarquable que la position de l'éprouvette 1 n'influence pas le rapport entre échos, qui reste le même si le revêtement 3 est placé au-dessus, vers le capteur 1, mais on préfère procéder comme on l'a représenté afin d'éviter de traverser le revêtement 3 et les absorptions conséquentes.

Les échos peuvent avoir leur amplitudes définies par une fonction enveloppe $A = k \, e^{-x\Sigma L}$, où k est une constante, $\Sigma L$ est la longueur totale parcourue par les ondes dans le substrat 2 (ou l'éprouvette 1, plus généralement), soit $(L_3 + L_4)$ pour le premier écho, $(L_3 + L_4 + L_6 + L_7)$ pour le deuxième, etc. et x est un paramètre constant mais différent pour chacune des éprouvettes 1 qu'on peut corréler à l'adhérence du revêtement 3.

La recherche initiale de la fonction de corrélation implique des essais mécaniques sur des éprouvettes 1 d'étalonnage. Comme on l'a mentionné au début, la face 10 du substrat 2 et la face libre du revêtement 3 sont collées à des mors respectifs 15 et 16 qu'on place sur une machine de traction, non représentée à la figure 4, pour réaliser un arrachement du revêtement 3. On procède par l'épreuve de lots composés d'une pluralité d'éprouvettes 1 semblables, et on sélectionne dans chacun de ces lots la résistance à l'arrachement la plus élevée qu'on a trouvée. En effet, un enseignement important apporté a été que ces valeurs de résistance les plus élevées étaient probablement les plus représentatives, puisqu'elles seules pouvaient être corrélées de façon simple aux mesures aux ultrasons ; les autres valeurs découlent peut-être d'amorces de rupture provoquées par une réalisation défectueuse du collage ou de la traction. La corrélation trouvée entre la contrainte $\sigma$ de résistance à l'arrachement ainsi obtenue et le paramètre de décroissance x précédemment calculé est linéaire, et très bonne comme le montre la figure 5 ; les points de la fonction sont obtenus en faisant varier les conditions de projection du revêtement 3 pour chaque lot d'éprouvette 1, à composition invariable de celui-ci et du substrat 2. Ils ont été obtenus avec des dépôts de l'alliage KC25NW, type 1, sur de l'Hastelloy X.

Le procédé rend possible l'évaluation de l'adhérence sur une série de points des éprouvettes 1 pour estimer sa régularité.

**Revendications**

1. Procédé de mesure d'adhérence d'un revêtement (3) sur un substrat (2), **caractérisé en ce qu'**il consiste à envoyer des ultrasons dans le substrat et vers le revêtement (3), à capter une succession d'échos ($L_2$, $L_5$, $L_8$, 11, 12, 13) résultant de réflexions des ultrasons sur des faces du substrat comprenant une interface entre le substrat et le revêtement, à évaluer un coefficient d'atténuation, x des échos traduisant une décroissance d'amplitude des échos (14) en fonction de leurs nombres de réflexions, et à déduire ladite adhérence d'une fonction de corrélation, estimée auparavant avec des éprouvettes d'étalonnage, entre les coefficients d'atténuation et les adhérences des revêtements, obtenues par des essais mécaniques, des éprouvettes d'étalonnage.

2. Procédé de mesure d'adhérence d'un revêtement sur un substrat selon la revendication 1, **caractérisé en ce que** la fonction de corrélation est obtenue en fabriquant plusieurs lots d'éprouvettes d'étalonnage, les éprouvettes de chacun des lots étant identiques, en arrachant les revêtements des substrats par traction (15) tout en mesurant la résistance à l'arrachement pour chacune des éprouvettes d'étalonnage, et en prenant pour résistance à l'arrachement de la fonction de corrélation, o la résistance à l'arrachement la meilleure dans chacun des lots.

3. Procédé de mesure d'adhérence d'un revêtement sur un substrat selon l'une quelconque des revendications 1 ou 2, **caractérisé en ce que** le coefficient d'atténuation est un coefficient de fonction exponentielle, qui A, multiplie une distance parcourue par les ultrasons dans l'éprouvette (1).

4. Procédé de mesure d'adhérence d'un revêtement sur un substrat selon l'une quelconque des revendications 1 à 3, **caractérisé en ce qu'**un capteur unique (6) émet et reçoit les ultrasons perpendiculairement au revêtement et au substrat, et **en ce que** le revêtement (3) est sur une face de l'éprouvette (1) éloignée du capteur.

**Claims**

1. Method of measuring the adhesion of a coating (3) on a substrate (2), **characterized in that** it consists in sending ultrasound into the substrate and towards the coating (3), in picking up a series of echoes ($L_2$, $L_5$, $L_8$, 11, 12, 13) resulting from ultrasound reflections on the faces of the substrate forming an interface between the substrate and the coating, in calculating an attenuation coefficient of the echoes resulting from a decrease in amplitude of the echoes (14) according to the number of times they are reflected, and in deducing the said adhesion from a correlation function, estimated beforehand with calibration samples, correlating the attenuation coefficients with the coating adhesion values obtained by mechanical tests, of the calibration samples.

2. Method of measuring the adhesion of a coating on a substrate according to Claim 1, **characterized in that** the correlation function is obtained by manufacturing several batches of calibration samples, the samples of each of the batches being identical, by tearing the coatings from the substrates by pulling (15) while measuring the tear strength for each of the calibration samples, and by taking the best tear strength in each of the batches as the tear strength of the correlation function.

3. Method of measuring the adhesion of a coating on a substrate according to either of Claims 1 and 2, **characterized in that** the attenuation coefficient is a coefficient with an exponential function, which multiplies the distance travelled by the ultrasound in the sample (1).

4. Method of measuring the adhesion of a coating on a substrate according to any one of Claims 1 to 3, **characterized in that** a single sensor (6) emits and receives the ultrasound perpendicular to the coating and to the substrate, and **in that** the coating (3) is on a face of the sample (1) away from the sensor.

**Patentansprüche**

1. Verfahren zum Messen des Haftvermögens einer Beschichtung (3) auf einem Substrat (2), **dadurch gekennzeichnet, dass** es darin besteht,

   Ultraschallwellen in das Substrat und in Richtung auf die Beschichtung (3) auszusenden,

   eine Folge von Echos ($L_2$, $L_5$, $L_8$, 11, 12, 13) aufzunehmen, die aus Reflexionen der Ultraschallwellen an den Flächen des Substrats, einschließlich der Grenzschicht zwischen dem Substrat und der Beschichtung, resultieren,

   einen Dämpfungskoeffizienten x der Echos zu ermitteln, der die Abnahme (14) der Echos in Abhängigkeit von der Zahl ihrer Reflexionen ausdrückt, und

   das Haftvermögen aus einer zuvor mit Eichprobekörpern ermittelten Funktion der Korrelation zwischen den Dämpfungskoeffizienten und den Haftvermögen der Beschichtungen herzuleiten, die durch mechanische Prüfungen der Eichprobekörper gewonnen wurden.

2. Verfahren zum Messen des Haftvermögens einer Beschichtung auf einem Substrat nach Anspruch 1, **dadurch gekennzeichnet, dass** die Korrelationsfunktion dadurch gewonnen wird, dass mehrere Lose von Eichprobekörpern hergestellt werden, wobei die Probekörper jedes dieser Lose identisch sind, dass die Beschichtungen der Substrate durch Zug (15) abgerissen werden und für jeden der Probekörper die Abreißfestigkeit gemessen wird, und dass als Abreißfestigkeit σ der Korrelationsfunktion die beste Abreißfestigkeit in jedem der Lose herangezogen wird.

3. Verfahren zum Messen des Haftvermögens einer Beschichtung auf einem Substrat nach Anspruch 1 oder 2, **dadurch gekennzeichnet, dass** der Dämpfungskoeffizient ein Koeffizient einer Exponentialfunktion A ist, der eine von den Ultraschallweilen in dem Probekörper (1) durchlaufene Entfernung multipliziert.

4. Verfahren zum Messen des Haftvermögens einer Beschichtung auf einem Substrat nach einem der Ansprüche 1 bis 3, **dadurch gekennzeichnet, dass** ein einziger Wandler (6) die Ultraschallwellen senkrecht zu der Beschichtung und zu dem Substrat aussendet und empfängt und dass die Beschichtung (3) sich auf der von dem Wandler abgewandten Seite des Probekörpers (1) befindet.

EP 1 130 391 B1

FIG. 1

FIG. 2

AMPLITUDE (mV)

**FIG. 3**

14

13

12

11

TEMPS DE
PROPAGATION
( μs)

**FIG. 4**

15     1     16

10     10

2     3

CONTRAINTE À
LA RUPTURE
(Mpa)

**FIG. 5**

40

5

1,562     2,005

RAPPORT
D'AMPLITUDES